# EUROPEAN PATENT SPECIFICATION

(11) **EP 3 202 992 B1**
(45) Date of publication and mention of the grant of the patent: **14.08.2024**
(21) Application number: 15894505.5
(22) Date of filing: 24.11.2015
(51) Int. Cl.: E04B 2/88, E04B 2/96, E06B 3/22, E04D 13/035, E04D 13/16, E04H 15/58

(54) **CURTAIN WALL BUILDINGS JUNCTIONS THERMAL BRIDGE HEAT TRANSFER BLOCKING STRUCTURE**
VORRICHTUNG ZUR VERMEIDUNG VON WÄRMEÜBERTRAGUNG DURCH THERMISCHE BRÜCKE EINES VORHANGFASSADENGEBÄUDES
STRUCTURE DE BLOCAGE DE TRANSFERT DE CHALEUR DE PONT THERMIQUE AUX JONCTIONS DE BÂTIMENTS DE MURS-RIDEAUX

(43) Date of publication of application: 09.08.2017
(73) Proprietor: Yu, Wei Ping, Beijing, 100084 (CN)
(72) Inventor: Yu, Wei Ping, Beijing, 100084 (CN)
(74) Representative: Gulde & Partner
(86) International application number: PCT/CN2015/095388
(87) International publication number: WO 2017/088107

(56) References cited:
- CN-A- 102 094 465
- CN-A- 103 510 644
- CN-A- 103 542 230
- CN-A- 104 210 211
- CN-U- 204 284 800
- CN-Y- 200 958 253
- KR-A- 20120 126 323
- KR-B1- 101 039 573
- KR-B1- 101 272 471
- US-A1- 2014 208 669
- US-A1- 2014 325 928
- ASPEN AEROGELS ET AL: "FLEXIBLE INDUSTRIAL INSULATION FOR HIGH-TEMPERATURE APPLICATIONS - PYROGEL XT-E", 17 February 2015 (2015-02-17), XP055383904, Retrieved from the Internet <URL:http://de.aerogel.com/_resources/common/userfiles/file/Data Sheets/Pyrogel_XT-E_DS.pdf> [retrieved on 20170621]

## Description

### TECHNICAL FIELD

The present invention refers to a structure for blocking heat transfer in a building, specifically to a structure for blocking heat transfer in a curtain wall building.

### BACKGROUND

In the curtain wall building, between an indoor metal frame and an outdoor metal frame or between an indoor metal frame and metal components is formed a thermal bridge which is very difficult to be treated, which causes great energy loss. In order to solve the above problem, thermal break material must be installed between the indoor metal frame and the outdoor metal frame or between the indoor metal frame and the metal components. Because the space formed between the indoor metal frame and the outdoor metal frame or between the indoor metal frame and the metal components is usually very small and the thermal conductivities of existing thermal break materials are all about 0.25W/(m K) so that it cannot play substantial effect in the given limited space, even if the material has been already installed, the thermal performance of the curtain wall cannot meet design requirements, and may cause condensation problem in the interior of the curtain wall. On the contrary, in order to ensure the thermal performance, the existing curtain wall structure must be changed to reserve more space for the existing thermal break materials; this will reduce the adaptability of the existing curtain wall profiles, and increase the usage of the profiles and the cost of cutting new dies. In addition, the shape of the space formed between the indoor metal frame and the outdoor metal frame or between the indoor metal frame and the metal components is various and irregular, and the existing thermal break materials are mostly fixed shape products and are difficult to adapt various space structures, the frame of the curtain wall has to be designed in coordination with the shapes of the existing thermal break material products. Meanwhile, to meet the required thermal performance, there is a need to use several different types of the thermal break products so as to make up each other's shortage, resulting in complex construction technology and poor structural strength. Furthermore, the combustion performance of the material used in the existing thermal break design is all fire rated B-class or below, so that it may be unsuitable for the curtain wall project with high fireproof and fire-resistance performance requirement. Also the structure of the thermal break is usually that the thermal break material is held between the outdoor metal and the indoor metal, and the existing thermal break material is usually regarded as the weak point and the security risk in the loading path of the structure.

Structures for blocking heat transfer through a thermal bridge of a curtain wall building are disclosed e.g. in US 2014/208669 A1, KR 2012 0126323 A and US 2014/325928 A1

### SUMMARY

The present invention aims to overcome the above problems and provide a structure for blocking heat transfer through a thermal bridge of a curtain wall building having the features of claim 1, which has simple structure, convenient construction technology, great structural strength, excellent fireproof performance, low comprehensive construction cost and substantially improved energy-saving effect of the curtain wall.

The invention is defined by the appended claim.

The description that follows is subjected to this limitation. Any disclosure lying outside the scope of said claim is only intended for illustrative as well as comparative purposes.

In an exemplary structure for blocking heat transfer through the thermal bridge of the curtain wall building not according to the present invention, the curtain wall is visual curtain wall glass and the visual curtain wall glass is fixed to the indoor metal frame by metal pressing blocks and gaskets. The binding sites of the indoor metal frame and the metal component cooperating each other forms a channel, the aerogel thermal break strip between the indoor metal frame and the metal component is fixed to the indoor metal frame by fasteners, and the joints of visual curtain wall glass and the metal component are sealed by silicone sealant.

In an exemplary structure for blocking heat transfer through the thermal bridge of the curtain wall building not according to the present invention, the curtain wall is a metal cladding panel, batt thermal insulation is installed in the inner side of the metal cladding panel, the binding sites of the metal cladding panel and the indoor metal frame cooperating each other forms a L-shape, the aerogel thermal break strip fixed at the binding sites of the metal cladding panel and the indoor metal frame by fasteners is also L-shape, and the joints of the adjacent metal cladding panels are sealed by silicone sealant.

In the structure for blocking heat transfer through the thermal bridge of the curtain wall building according to the present invention, the curtain wall is visual curtain wall glass and the visual curtain wall glass is fixed to the indoor metal frame by structural silicone sealant and double-sided tapes. The metal component is U-shape, the outdoor metal frame is connected to the indoor metal frame by nylon thermal break strips and the U-shaped metal component is fixed to the indoor metal frame by metal fasteners. Gaskets are installed between the outdoor metal frame and the metal component and the aerogel thermal break strip between the indoor metal frame and the metal components is closely fixed to the U-shaped inner side of the metal component.

In an exemplary structure for blocking heat transfer through the thermal bridge of the curtain wall building not according to the present invention, the metal components comprise a metal sub-frame, a metal edge protector, an outer metal cladding panel and an inner metal cladding panel. The outside of the indoor metal frame is fixed with the metal sub-frame and the metal edge protector by fasteners. The curtain wall comprises spandrel curtain wall glass in an upper level and visual curtain wall glass in a lower level. The spandrel curtain wall glass is fixed to the metal sub-frame by structural silicone sealant and the visual curtain wall glass is fixed to the indoor metal frame by structural silicone sealant. The outer metal cladding panel and the inner metal cladding panel are installed from the outside to the inside, and the two metal cladding panels are both installed in the inner side of the spandrel curtain wall glass. Batt thermal insulation is installed between the two metal cladding panels, the inner metal cladding panel and the outer metal cladding panel are both fixed to the indoor metal frame. The outer metal cladding panel is L-shape, the aerogel thermal break strip installed between the indoor metal frame and the metal sub-frame, the metal edge protector and the outer metal cladding panel is L-shape, and the metal edge protector and the spandrel curtain wall glass as well as the metal edge protector and the visual curtain wall glass are both sealed by silicone sealant.

In an exemplary structure for blocking heat transfer through the thermal bridge of the curtain wall building not according to the present invention, the metal components comprise a metal sub-frame, a metal edge protector, an outer metal cladding panel and an inner metal cladding panel. The outside of the indoor metal frame is fixed with the metal sub-frame and the metal edge protector by fasteners. The curtain wall comprises spandrel curtain wall glass in an upper level and visual curtain wall glass in a lower level. The spandrel curtain wall glass is fixed to the metal sub-frame by structural silicone sealant and the visual curtain wall glass is fixed to the indoor metal frame by structural silicone sealant. The two metal cladding panels are provided from the outside to the inside and the two metal cladding panels are both provided in the inner side of the spandrel curtain wall glass. The inner metal cladding panel and the outer metal cladding panel are both fixed to the indoor metal frame. The outer metal cladding panel is L-shape, the aerogel thermal break strip installed between the indoor metal frame and the metal sub-frame and the outer metal cladding panel is flat and straight, and the metal edge protector and the spandrel curtain wall glass as well as the metal edge protector and the visual curtain wall glass are both sealed by silicone sealant.

In an exemplary structure for blocking heat transfer through the thermal bridge the curtain wall building not according to the present invention, the curtain wall is stone or metal cladding panel, the metal components are metal flashings, and an aerogel thermal break strip is installed between the indoor metal frame and the stone or the metal cladding panel and the metal flashings. The aerogel thermal break strip is L-shape and closely installed close to the indoor metal frame, the stone or the metal cladding panel is fixed to the indoor metal frame by metal brackets, the two ends of the aerogel thermal break strip are respectively sealed by silicone sealant and the two adjacent aerogel thermal break strips are sealed by silicone sealant. Batt thermal insulation is installed in the inner side of the metal flashings.

In an exemplary structure for blocking heat transfer through the thermal bridge of the curtain wall building not according to the present invention, the curtain wall is visual curtain wall glass comprising outer visual curtain wall glass and inner visual curtain wall glass. The outdoor metal frame is fixed to the indoor metal frame by a first and a second nylon thermal break block. The inner visual curtain wall glass is fixed to the indoor metal frame by structural silicone sealant, and the outer visual curtain wall glass is fixed to the outdoor metal frame and the indoor metal frame by structural silicone sealant. The metal component is an outer decorative cover, and the outer decorative cover is clamped onto the outdoor metal frame, the outer visual curtain wall glass and the inner visual curtain wall glass. The aerogel thermal break strips comprise a first aerogel thermal break strip and a second aerogel thermal break strip, the first aerogel thermal break strip is installed between the outdoor metal frame, the indoor metal frame, the first nylon thermal break block and the second nylon thermal break block, and the second aerogel thermal break strip is installed between the indoor metal frame, the second nylon thermal break block, the outer decorative cover and the inner visual curtain wall glass.

In an exemplary structure for blocking heat transfer through the thermal bridge of the curtain wall building not according to the present invention, the curtain wall is curtain wall glass and the metal components comprise an indoor metal cladding panel, an outdoor metal cladding panel and a metal flashing. The curtain wall glass is fixed to the indoor metal frame by structural silicone sealant. The outdoor metal frame is fixed to the indoor metal frame by nylon thermal break strips. The outdoor metal cladding panel is V-shape, the outer ends of the outdoor metal cladding panel are fixed to the outdoor metal frame by fasteners respectively, and the inner ends of the outdoor metal cladding panel are fixed to the metal flashing. The metal flashing is mechanically fixed to the indoor metal frame and the indoor metal cladding panel is fixed to the metal flashing by fasteners. The aerogel thermal break strips comprise a first aerogel thermal break strip and a second aerogel thermal break strip. The first aerogel thermal break strip is installed between the outdoor metal cladding panel and the metal flashing and the first aerogel thermal break strip is V-shape. The second aerogel thermal break strip is installed between the indoor metal frame and the outdoor metal frame and the second aerogel thermal break strip is L-shape. Nylon thermal break strips are installed between one end of the second aerogel thermal break strip and the curtain wall glass, nylon thermal break strips are installed between another end of the second aerogel thermal break strip and the indoor metal frame and batt thermal insulation is installed between the indoor metal cladding panel and the metal flashing.

An exemplary structure for blocking heat transfer through a thermal bridge of a skylight not according to the present invention, comprises metal window frames fixed to a steel beam and operable metal window sashes with skylight glass fixed to them. A metal condensation water collection channel is installed between the metal window frames and the steel beam, a PVC thermal break mat is installed between the two adjacent metal window frames and the metal condensation water collection channel, a concave metal drainage gutter is installed between the metal window frames, an integral and concave aerogel thermal break strip which is installed close to the outside and made of an aerogel thermal insulation blanket is fixed between the metal window frames and the concave metal drainage gutter and the PVC thermal break mat, and the two ends of the aerogel thermal break strip and the metal window frames are sealed by silicone sealant.

An exemplary structure for blocking heat transfer through a thermal bridge of a window frame not according to the present invention, comprises a steel frame, an aluminum alloy window frame and window glass mounted in it, as well as an indoor and an outdoor metal decorative cover. An integral aerogel thermal break strip made of an aerogel thermal insulation blanket is fixed between the steel frame, the indoor and the outdoor metal decorative cover and the aluminum alloy window frame.

An exemplary structure for blocking heat transfer through a thermal bridge of a cantilevered beam of a canopy not according to the present invention, comprises a cantilevered beam of a canopy and an exterior metal cladding panel fixed around the beam of the canopy by metal brackets. An integral aerogel thermal break strip which is wrapped over the external surface of the beam of the canopy and made of an aerogel thermal insulation blanket is installed between the beam of the canopy and the exterior metal cladding panel.

An exemplary structure for blocking heat transfer through a thermal bridge of a roof not according to the present invention, comprises a metal roof beam with a rectangular vertical section, metal flashings and an indoor roof metal cladding panel. Batt thermal insulation is filled between the metal roof beam, the metal flashings and the indoor roof metal cladding panel. The two adjacent indoor roof metal cladding panels are connected by metal clampers and fixed to the metal roof beam by fasteners. An integral aerogel thermal break strip made of an aerogel thermal insulation blanket is fixed between the metal roof beam and the metal clampers, and the joint of the two adjacent indoor roof metal cladding panels is sealed by silicone sealant.

After adopting the above solutions, comparing to the prior art, since the integral aerogel thermal break strip which is installed close to the outside and made of the aerogel thermal insulation blanket is fixed between the indoor metal frame and the curtain wall or the outdoor metal frame or the metal components, and the thermal conductivity of the aerogel thermal break strip made of the aerogel thermal insulation blanket is not higher than 0.021W/(m·K), the thermal performance of the curtain wall is greatly enhanced, it is sure that there is no condensation problem in the interior of the curtain wall, and the comprehensive construction cost of the curtain wall is decreased without changing the frame profiles of the existing curtain wall design. The structure of the thermal break is simplified, therefore the structure of the curtain wall is simplified and the construction is convenient to be well adapted to the various cross-sectional shapes with the advantage that the aerogel thermal insulation blanket is easy to assembly, and form an identical material, continuous and integral thermal break design, substantially improving energy-saving effect of the curtain wall. Furthermore, since the aerogel thermal insulation blanket is made of thermal break material with fire rated A-class combustion performance, the fireproof and fire-resistance performance of the curtain wall can be better ensured.

The structure for blocking heat transfer through the thermal bridge of the curtain wall building according to the invention will be described in detail below in conjunction with the drawings.

### BRIEF DESCRIPTION OF THE DRAWINGS

Figure 1 is a cross section view of a first embodiment, which does not fall under the claimed invention, but being useful for the understanding thereof, of the structure for blocking heat transfer through the thermal bridge of the curtain wall building;
Figure 2 is a cross section view of a second embodiment, which does not fall under the claimed invention, but being useful for the understanding thereof, of the structure for blocking heat transfer through the thermal bridge of the curtain wall building;
Figure 3 is a longitudinal section view of a third embodiment of the structure for blocking heat transfer through the thermal bridge of the curtain wall building according to the invention;
Figure 4 is a longitudinal section view of a fourth embodiment, which does not fall under the claimed invention, but being useful for the understanding thereof, of the structure for blocking heat transfer through the thermal bridge of the curtain wall building;
Figure 5 is a longitudinal section view of a fifth embodiment, which does not fall under the claimed invention, but being useful for the understanding thereof, of the structure for blocking heat transfer through the thermal bridge of the curtain wall building;
Figure 6 is a cross section view of a sixth embodiment, which does not fall under the claimed invention, but being useful for the understanding thereof, of the structure for blocking heat transfer through the thermal bridge of the curtain wall building;
Figure 7 is a cross section view of a seventh embodiment, which does not fall under the claimed invention, but being useful for the understanding thereof, of the structure for blocking heat transfer through the thermal bridge of the curtain wall building;
Figure 8 is a longitudinal section schematic of a eighth embodiment, which does not fall under the claimed invention, but being useful for the understanding thereof, of the structure for blocking heat transfer through the thermal bridge of the curtain wall building;
Figure 9 is a longitudinal section schematic of the structure for blocking heat transfer through the thermal bridge of the skylight, which does not fall under the claimed invention, but being useful for the understanding thereof;
Figure 10 is a longitudinal section schematic of the structure for blocking heat transfer through the thermal bridge of the cantilevered beam of the canopy, which does not fall under the claimed invention, but being useful for the understanding thereof;
Figure 11 is a cross section along A - A in figure 10;
Figure 12 is a cross section view of the structure for blocking heat transfer through the thermal bridge of the window frame, which does not fall under the claimed invention, but being useful for the understanding thereof; and
Figure 13 is a longitudinal section view of the structure for blocking heat transfer through the thermal bridge of the roof, which does not fall under the claimed invention, but being useful for the understanding thereof.

### DESCRIPTION OF THE PREFERRED EMBODIMENTS

A structure for blocking heat transfer through a thermal bridge of a curtain wall building according to the invention comprises a curtain wall, an indoor metal frame, an outdoor metal frame and/or a metal component. An integral aerogel thermal break strip which is installed close to the outside and made of an aerogel thermal insulation blanket is fixed between the indoor metal frame and the curtain wall and/or the outdoor metal frame and/or the metal component, the commercially available aerogel heat insulation blanket (Aerogel) is manufactured by Warmframe Corporation of China, Cabot Corporation and ASPEN Corporation of United States, with the thermal conductivity up to 0.015 - 0.021 W/(m k).

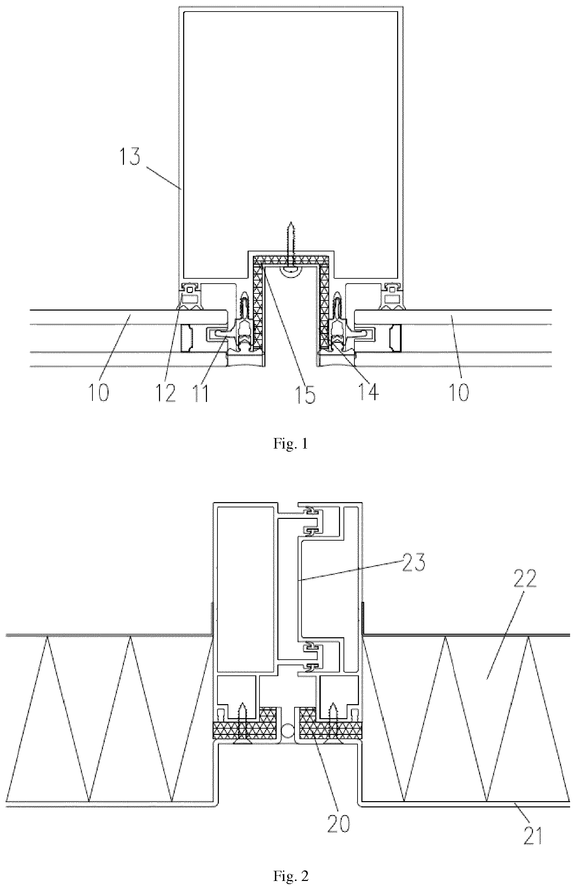

In a first embodiment shown in figure 1, which does not fall under the claimed invention, but being useful for the understanding thereof, the structure for blocking heat transfer through the thermal bridge of the curtain wall building comprises a curtain wall, an indoor metal frame 13 and a metal component 14 outside the indoor metal frame 13. The indoor metal frame 13 is an aluminum alloy frame, and the metal component 14 is an aluminum alloy component. The curtain wall is visual curtain wall glass 10 and the visual curtain wall glass 10 is fixed to the indoor metal frame 13 by metal pressing blocks 11 and gaskets 12. The binding sites of the indoor metal frame 13 and the metal component 14 cooperating each other forms a channel, and the channel outside the metal component 14 is used to install the lighting fixture. A concave aerogel thermal break strip 15 is installed between the indoor metal frame 13 and the metal component 14, the aerogel thermal break strip 15 is fixed to the indoor metal frame 13 by screw fasteners and the joints of the visual curtain wall glass 10 and the metal component 14 are sealed by silicone sealant.

Because the aerogel thermal break strip 15 made of an aerogel thermal insulation blanket with the thermal conductivity no greater than 0.021 W/(m·K) is installed in a concave and limited space between the indoor metal frame 13 and the metal component 14, the thermal performance of the curtain wall is substantially enhanced, it is sure that there is no condensation problem in the interior of the curtain wall, and the comprehensive construction cost of the curtain wall is decreased without changing the frame profiles of the existing curtain wall. The structure of the thermal break is simplified to be well adapted to the concave cross-sectional shape with the advantage that the aerogel thermal insulation blanket is easy to assembly, and form an identical material, continuous and integral thermal break design. Since the aerogel thermal insulation blanket is made of thermal break material with fire rated A-class combustion performance, the fireproof and fire-resistance performance of the curtain wall can be better ensured. The aerogel thermal break strip made of the aerogel thermal insulation blanket is mechanically fixed to the indoor metal frame and the metal component by fasteners, making the connection stronger and eliminating the potential structural safety risk.

In a second embodiment as shown in figure 2, which does not fall under the claimed invention, but being useful for the understanding thereof, the structure for blocking heat transfer through the thermal bridge of the curtain wall building comprises a curtain wall 21 and an indoor metal frame 23, wherein the curtain wall 21 is a metal cladding panel, batt thermal insulation 22 is installed in the inner side of the metal cladding panel 21, and the indoor metal frame 23 is an aluminum alloy frame. The metal cladding panel 21 and the indoor metal frame 23 cooperating each other form a L-shape, aerogel thermal break strip 20 fixed at the binding sites of the metal cladding panel 21 and the indoor metal frame 23 by screw fasteners is also L-shape, the aerogel thermal break strips 20 are two, and the joints of the two adjacent metal cladding panels 21 are sealed by silicone sealant.

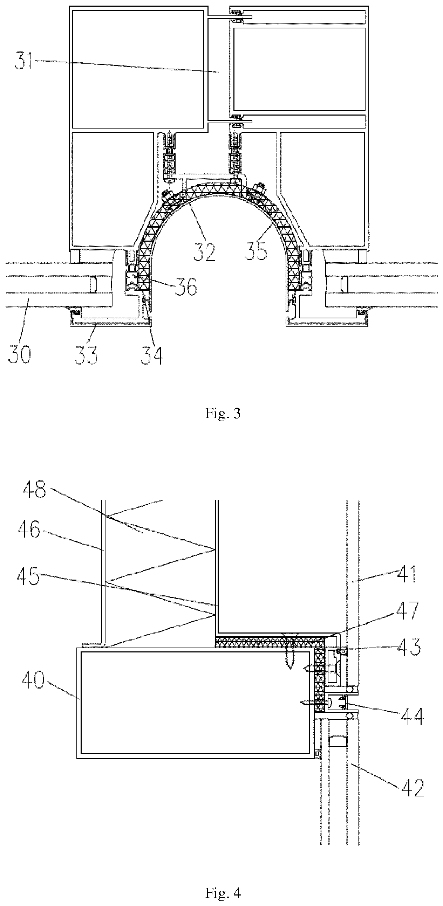

In a third embodiment as shown in figure 3, the structure for blocking heat transfer through the thermal bridge of the curtain wall building according to the present invention comprises a curtain wall, an indoor metal frame 31, an outdoor metal frame 33 and a metal component 32. The curtain wall is visual curtain wall glass 30 and the indoor metal frame 31 and the outdoor metal frame 33 are both aluminum alloy frames. The visual curtain wall glass 30 is fixed to the indoor metal frame 31 by structural silicone sealant and double-sided tapes. The metal component 32 is a U-shaped aluminum alloy component, the outdoor metal frame 33 is connected to the indoor metal frame 31 by nylon thermal break strips 36 and the U-shaped aluminum alloy component is fixed to the indoor metal frame 31 by metal fasteners. Gaskets 34 are installed between the outdoor metal frame 33 and the metal component 32 and the aerogel thermal break strip 35 between the indoor metal frame 31 and the metal component 32 is closely fixed to the U-shaped inner side of the metal component 32.

In a fourth embodiment as shown in figure 4, which does not fall under the claimed invention, but being useful for the understanding thereof, the structure for blocking heat transfer through the thermal bridge of the curtain wall building comprises a curtain wall, an indoor metal frame 40 and metal components which comprise a metal sub-frame 43, a metal edge protector 44, an outer metal cladding panel 45 and an inner metal cladding panel 46. The indoor metal frame 40 is an aluminum alloy frame and the metal sub-frame 43 and the metal edge protector 44 are fixed to the outside of the indoor metal frame 40 by screw fasteners. The metal sub-frame 43 is an aluminum alloy sub-frame and the metal edge protector 44 is an aluminum alloy edge protector. The curtain wall comprises spandrel curtain wall glass 41 in an upper level and visual curtain wall glass 42 in a lower level. The spandrel curtain wall glass 41 is fixed to the metal sub-frame 43 by structural silicone sealant and the visual curtain wall glass 42 is fixed to the indoor metal frame 40 by structural silicone sealant. The outer metal cladding panel 45 and the inner metal cladding panel 46 are both installed in the inner side of the spandrel curtain wall glass 41 and the outer metal cladding panel 45 and the inner metal cladding panel 46 are installed from the outside to the inside. The inner metal cladding panel 46 is fixed to the indoor metal frame 40 and the outer metal cladding panel 45 is fixed to the indoor metal frame 40 by screw fasteners. The outer metal cladding panel 45 is L-shape and an aerogel thermal break strip 47 is also L-shape. The aerogel thermal break strip 47 is installed between the indoor metal frame 40 and the metal sub-frame 43, the metal edge protector 44 and the outer metal cladding panel 45. The metal edge protector 44 and the spandrel curtain wall glass 41 as well as the metal edge protector 44 and the visual curtain wall glass 42 are both sealed by silicone sealant. Batt thermal insulation 48 is installed between the outer metal cladding panel 45 and the inner metal cladding panel 46.

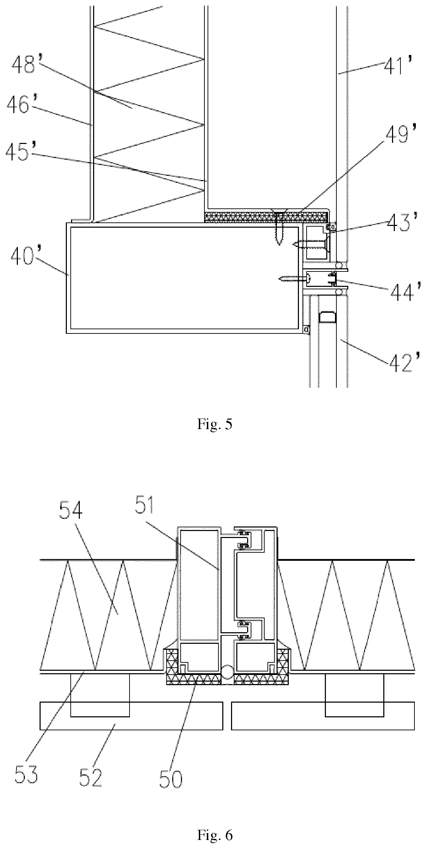

In a fifth embodiment as shown in figure 5, which does not fall under the claimed invention, but being useful for the understanding thereof, the structure for blocking heat transfer through the thermal bridge of the curtain wall building comprises a curtain wall, an indoor metal frame 40' and metal components which comprise a metal sub-frame 43', a metal edge protector 44', an outer metal cladding panel 45' and an inner metal cladding panel 46'. The indoor metal frame 40' is an aluminum alloy frame and the metal sub-frame 43' and the metal edge protector 44' are fixed to the outside of the indoor metal frame 40' by screw fasteners. The metal sub-frame 43' is an aluminum alloy sub-frame and the metal edge protector 44' is an aluminum alloy edge protector. The curtain wall comprises spandrel curtain wall glass 41' in an upper level and visual curtain wall glass 42' in a lower level. The spandrel curtain wall glass 41' is fixed to the metal sub-frame 43' by structural silicone sealant and the visual curtain wall glass 42' is fixed to the indoor metal frame 40' by structural silicone sealant. The outer metal cladding panel 45' and the inner metal cladding panel 46' are installed in the inner side of the spandrel curtain wall glass 41' and the outer metal cladding panel 45' and the inner metal cladding panel 46' are installed from the outside to the inside. The inner metal cladding panel 46' is fixed to the indoor metal frame 40' and the outer metal cladding panel 45' is fixed to the indoor metal frame 40' by screw fasteners. The outer metal cladding panel 45' is L-shape and an aerogel thermal break strip 49' is flat and straight. The aerogel thermal break strip 49' is installed between the indoor metal frame 40' and the metal sub-frame 43', the metal edge protector 44' and the outer metal cladding panel 45'. The metal edge protector 44' and the spandrel curtain wall glass 41' as well as the metal edge protector 44' and the visual curtain wall glass 42' are both sealed by silicone sealant. Batt thermal insulation 48' is installed between the outer metal cladding panel 45' and the inner metal cladding panel 46'.

In a sixth embodiment as shown in figure 6, which does not fall under the claimed invention, but being useful for the understanding thereof, the structure for blocking heat transfer through the thermal bridge of the curtain wall building comprises a curtain wall, an indoor metal frame 51 and metal components. The curtain wall is stone or metal cladding panel 52, and the metal components are metal flashings 53, and the indoor metal frame 51 is an aluminum alloy frame. The stone or the metal cladding panel 52 is fixed to the outside of the indoor metal frame 51 by metal brackets, aerogel thermal break strips 50 are installed between the indoor metal frame 51 and the stone or the metal cladding panel 52 and the metal flashings 53. The aerogel thermal break strips 50 are L-shape and the aerogel thermal break strips 50 are closely installed close to the indoor metal frame 51. The two ends of the aerogel thermal break strips 50 are respectively sealed by silicone sealant and the two adjacent aerogel thermal break strips 50 are sealed by silicone sealant. Batt thermal insulation 54 is installed in the inner side of the metal flashings 53.

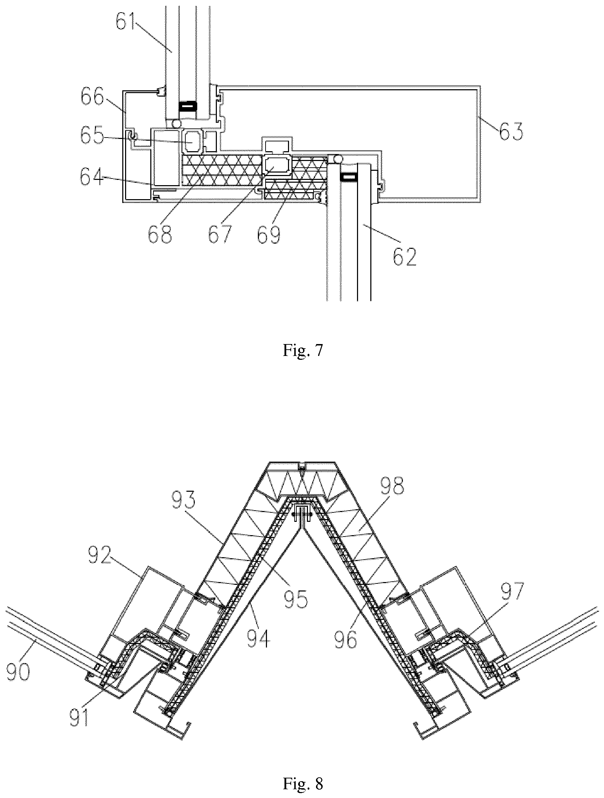

In a seventh embodiment as shown in figure 7, which does not fall under the claimed invention, but being useful for the understanding thereof, the structure for blocking heat transfer through the thermal bridge of the curtain wall building comprises a curtain wall, an indoor metal frame 63, an outdoor metal frame 64 and a metal component. The indoor metal frame 63 and the outdoor metal frame 64 are both aluminum alloy frames. The curtain wall is visual curtain wall glass comprising outer visual curtain wall glass 61 and inner visual curtain wall glass 62. The outdoor metal frame 64 is fixed to the indoor metal frame 63 by a first and a second nylon thermal insulation block 65, 67. The inner visual curtain wall glass 62 is fixed to the indoor metal frame 63 by structural silicone sealant and the outer visual curtain wall glass 61 is fixed to the outdoor metal frame 64 and the indoor metal frame 63 by structural silicone sealant. The metal component is an outer aluminum alloy decorative cover 66 and the outer aluminum alloy decorative cover 66 is clamped on the outdoor metal frame 64, the outer visual curtain wall glass 61 and the inner visual curtain wall glass 62. A first aerogel thermal break strip 68 is installed between the outdoor metal frame 64, the indoor metal frame 63, the first nylon thermal insulation block 65 and the second nylon thermal insulation block 67, and a second aerogel thermal break strip 69 is installed between the indoor metal frame 63, the second nylon thermal insulation block 67, the outer aluminum alloy decorative cover 66 and the inner visual curtain wall glass 62.

As shown in figure 8, which does not fall under the claimed invention, but being useful for the understanding thereof, the structure for blocking heat transfer through the thermal bridge of the curtain wall building comprises a curtain wall, an outdoor aluminum alloy frame 91, an indoor aluminum alloy frame 92 and metal components. The metal components comprise an indoor metal cladding panel 93, an outdoor metal cladding panel 94 and a metal flashing 95. The curtain wall is visual curtain wall glass 90 and the curtain wall glass 90 is fixed to the indoor aluminum alloy frame 92 by structural silicone sealant. The outdoor aluminum alloy frame 91 is fixed to the indoor aluminum alloy frame 92 by nylon thermal break strips, the outdoor metal cladding panel 94 is V-shape, the outer ends of the outdoor metal cladding panel 94 are both fixedly fixed to the outdoor aluminum alloy frame 91 by screw fasteners and the inner ends of the outdoor metal cladding panel 94 are fixed to the metal flashing 95. A first integral aerogel thermal break strip 96 made of an aerogel thermal insulation blanket is installed between the outdoor metal cladding panel 94 and the metal flashing 95 and the first aerogel thermal break strip 96 is V-shape. A second integral aerogel thermal break strip 97 made of an aerogel thermal insulation blanket is installed between the indoor aluminum alloy frame 92 and the outdoor aluminum alloy frame 91 and the second aerogel thermal break strip 97 is L-shape. The nylon thermal break strips are installed between one end of the second aerogel thermal break strip 97 and the visual curtain wall glass 90, the nylon thermal break strips are installed between another end of the second aerogel thermal break strip 97 and the indoor aluminum alloy frame 92 and batt thermal insulation 98 is installed between the indoor metal cladding panel 93 and the metal flashing 95.

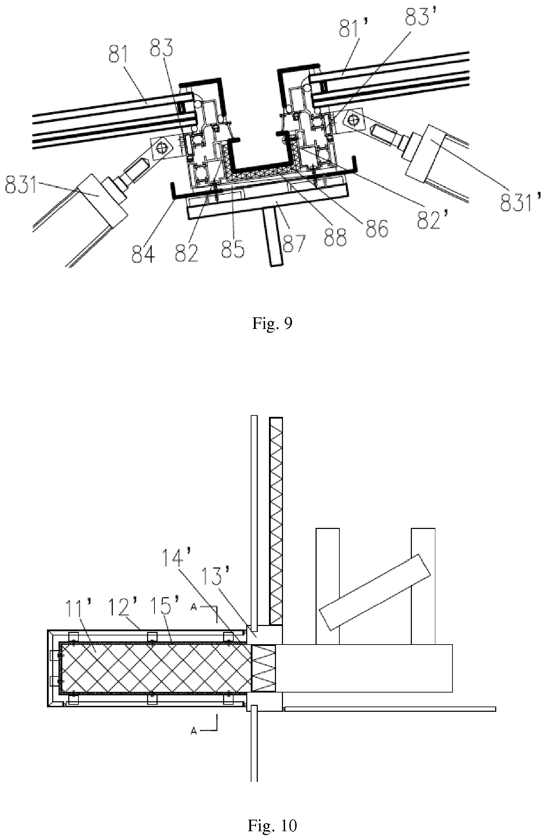

As shown in figure 9, a structure for blocking heat transfer through the thermal bridge of the skylight comprises skylight glass 81, 81', metal window frames 82, 82', metal window sashes 83, 83', a metal condensation water collection channel 84, a PVC thermal break mat 85, a metal drainage gutter 86 and a steel beam 87. The skylight glass 81, 81' is fixed to the metal window sashes 83, 83' by silicone sealant, the metal window frames 82, 82' and the metal condensation water collection channel 84 are respectively connected to the steel beam 87 by screw fasteners and the PVC thermal break mat 85 is installed between the metal condensation water collection channel 84 and the metal window frames 82, 82'. The metal drainage gutter 86 is concave. A concave and integral aerogel thermal break strip 88 made of an aerogel thermal insulation blanket is installed between the metal drainage gutter 86 and the two metal window frames 82, 82' and the PVC thermal break mat 85. The metal drainage gutter 86, the aerogel thermal break strip 88 and the metal window frames 82, 82' are connected by screw fasteners. Both ends of the aerogel thermal break strip 88 and the two metal window frames 82, 82' are sealed by silicone sealant. Opening push-rods 831, 831' are hinged at the metal window sashes 83, 83'. Contacting sites of the metal window sashes 83, 83' and the metal window frames 82. 82' are provided with gaskets, and the metal window sashes 83, 83' can be opened together with the skylight glass 81, 81' driven by the opening push-rods 831, 831'.

The aerogel thermal break strip made of the aerogel thermal insulation blanket with the thermal conductivity no greater than 0.021 W/(m K) is installed in limited spaces between the outdoor metal cladding panel and the metal flashing as well as the outdoor aluminum alloy frame and the indoor aluminum alloy frame, so that the thermal performance of the curtain wall is substantially enhanced, it is sure that there is no condensation problem in the interior of the curtain wall, and the comprehensive construction cost of the curtain wall is decreased without changing the frame profiles of the existing curtain wall design. The structure of the thermal break is simplified to be well adapted to the L-shaped or V-shaped cross-section with the advantage that the aerogel thermal insulation blanket is easy to assembly, and form an identical material, continuous and integral thermal break design at the most exterior of the thermal insulation layer of the curtain wall. Moreover, the thermal conductivity of the aerogel thermal insulation blanket is lower than the thermal conductivity of air so that the aerogel thermal break strip made of the aerogel thermal insulation blanket can effectively reduce the heat loss generated from air convection. In addition, the aerogel thermal insulation blanket is made of the thermal break material with fire rated A-class combustion performance so that the fireproof and fire-resistance performance of the curtain wall can be better ensured.

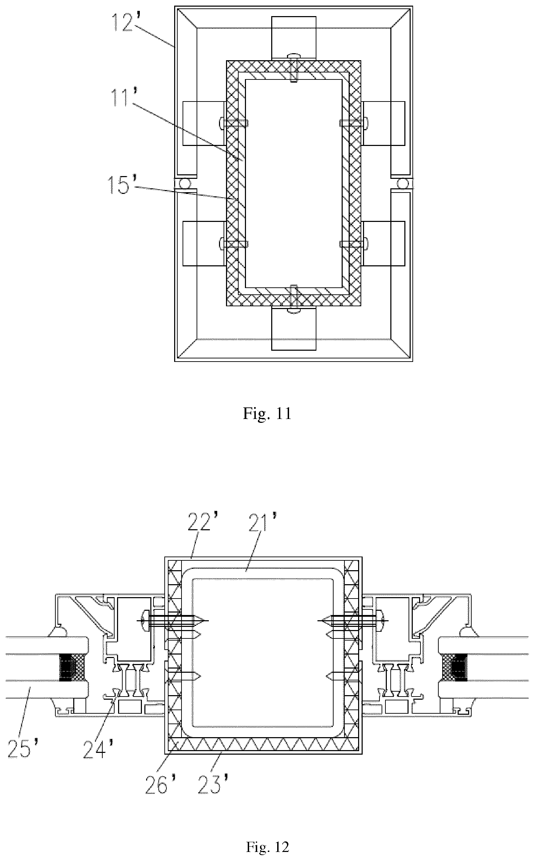

As shown in figures 10 and 11, a structure for blocking heat transfer through the thermal bridge of a cantilevered beam of a canopy comprises a cantilevered canopy beam 11' and an exterior metal cladding panel 12', the exterior metal cladding panel 12' is installed around the canopy beam 11' and the exterior metal cladding panel 12' is fixed to the canopy beam 11' by metal brackets. An aerogel thermal break strip 15' is installed between the canopy beam 11' and the exterior metal cladding panel 12' and the aerogel thermal break strip 15' is a continuous strip, made of an aerogel thermal insulation blanket and wrapped over the external surface of the canopy beam 11'. The canopy beam 11' is fixed to the main structure by brackets. The two adjacent exterior metal cladding panels 12' are sealed by silicone sealant, the exterior metal cladding panel 12' and an upright curtain wall frame 13' are sealed by silicone sealant, a metal flashing 14' is installed between the two upright curtain wall frames 13' and batt thermal insulation is installed in the inner side of the metal flashing 14.

An aerogel thermal insulation blanket with the thermal conductivity no greater than 0.021 W/(m K) is wrapped over the external surface of the canopy beam 11' in the limited space, with full advantage of the characteristic of low thermal conductivity, the thermal performance of the building is significantly improved and the risk of condensation problem in the interior of the building is reduced. Moreover, since the thickness of the aerogel thermal insulation blanket is only 6 mm or 10 mm, the cladding thickness of the metal cladding panel is maximally reduced, the esthetic effect of the building is guaranteed and the comprehensive construction cost of the curtain wall is simultaneity reduced. Because the aerogel thermal insulation blanket is made of thermal break material with fire rated A-class, the fireproof and fire-resistance performance of the building can be better ensured.

As shown in figure 12, a structure for blocking heat transfer through a thermal bridge of a window frame comprises a steel frame 21', an aluminum alloy window frame 24' and window glass 25' mounted in the aluminum alloy window frame 24', as well as an indoor and an outdoor metal decorative cover 22', 23'. An integral aerogel thermal break strip 26' made of an aerogel thermal insulation blanket is fixed between the steel frame 21', the indoor and the outdoor metal decorative cover 22', 23' and the aluminum alloy window frame 24'.

The aerogel thermal break strip 26' is made of a concave aerogel thermal insulation blanket with the thermal conductivity no greater than 0.021 W/(m K) so that the thermal performance of the curtain wall is substantially enhanced, it is sure that there is no condensation problem in the interior of the curtain wall, and the comprehensive construction cost of the curtain wall is decreased without changing the frame profiles of the existing curtain wall design. In addition, the structure of the thermal break is simplified to be well adapted to the concave cross-sectional shape with the advantage that the aerogel thermal insulation blanket is easy to assembly, and form an identical material, continuous and integral thermal break design. Since the aerogel thermal insulation blanket is made of thermal break material with fire rated A-class, the fireproof and fire-resistance performance of the curtain wall can be better ensured.

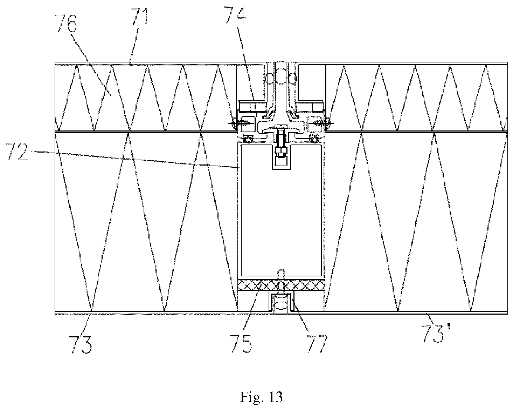

As shown in figure 13, a structure for blocking heat transfer through a thermal bridge of a roof comprises a metal roof beam 72 with a rectangular vertical section, a metal flashing 76 and indoor roof metal cladding panels 73, 73'. Batt thermal insulation is filled between the metal roof beam 72, the metal flashing 76 and the indoor roof metal cladding panels 73, 73'. The two adjacent indoor roof metal cladding panels 73, 73' are connected together by metal clampers 77 and fixed to the metal roof beam 72 by screw fasteners. An integral aerogel thermal break strip 75 made of an aerogel thermal insulation blanket is fixed between the metal roof beam 72 and the metal clampers 77, and the joint of the two adjacent indoor roof metal cladding panels 73, 73' is sealed by silicone sealant.

### PRACTICAL APPLICABILITY

The structure for blocking heat transfer through the thermal bridge of the curtain wall building according to the invention has simple structure, convenient construction technology, great structural strength, excellent fireproof performance, low comprehensive construction cost and substantially improved energy-saving effect of the curtain wall and it is applicable to various curtain wall buildings.

## Claims

1. A structure for blocking heat transfer through a thermal bridge of a curtain wall building, said structure comprising a curtain wall (30), an indoor metal frame (31) and an outdoor metal frame (33) and a metal component (32), wherein an integral aerogel thermal break strip (35) which is installed close to the outside and made of aerogel thermal insulation blanket is fixed between the indoor metal frame (31) and the metal component (32), wherein the curtain wall is visual curtain wall glass (30), the visual curtain wall glass (30) is fixed to the indoor metal frame (31) by structural silicone sealant and double-sided tapes, the metal component (32) is U-shape, the outdoor metal frame (33) is fixed to the indoor metal frame (31) by nylon thermal break strips (36) and the U-shaped metal component (32) is fixed to the indoor metal frame (31) by metal fasteners, gaskets (34) are installed between the outdoor metal frame (33) and the metal component (32) and the aerogel thermal break strip (35) between the indoor metal frame (31) and the metal component (32) is closely fixed to the U-shaped inner side of the metal component (32);
wherein the thermal conductivity of the thermal break strip (35) is no greater than 0.021 W/(m·K).

## Patentansprüche

1. Struktur zum Blockieren der Wärmeübertragung durch eine Wärmebrücke eines Vorhangwandgebäudes, wobei die Struktur eine Vorhangwand (30), einen Innenmetallrahmen (31), einen Außenmetallrahmen (33) und ein Metallbauteil (32) umfasst, wobei zwischen dem Innenmetallrahmen (31) und dem Metallbauteil (32) ein integraler Aerogel-Thermotrennstreifen (35) befestigt ist, der nahe der Außenseite installiert ist und aus einer Aerogel-Wärmeisolierdecke hergestellt ist, wobei die Vorhangwand optisches Vorhangwandglas (30) ist, das durch strukturelle Silikondichtungsmittel und doppelseitige Bänder an dem Innenmetallrahmen (31) befestigt ist, wobei das Metallbauteil (32) U-förmig ist, wobei der Außenmetallrahmen (33) durch Nylon-Thermotrennstreifen (36) an dem Innenmetallrahmen (31) befestigt ist und das U-förmige Metallbauteil (32) durch Metallbefestigungselemente an dem Innenmetallrahmen (31) befestigt ist, wobei Flachdichtungen (34) zwischen dem Außenmetallrahmen (33) und dem Metallbauteil (32) installiert sind und der Aerogel-Thermotrennstreifen (35) zwischen dem Innenmetallrahmen (31) und dem Metallbauteil (32) eng an der U-förmigen Innenseite des Metallbauteils (32) befestigt ist;
wobei die Wärmeleitfähigkeit des Thermotrennstreifens (35) nicht größer als 0,021 W/(m · K) ist.

## Revendications

1. Structure de blocage du transfert de chaleur à l'aide d'un pont thermique d'un bâtiment à mur-rideau, comprenant un mur-rideau (30), un cadre métallique intérieur (31), un cadre métallique extérieur (33) et un composant métallique (32), dans laquelle une bande de rupture thermique en aérogel (35) intégrée qui est disposée proche de l'extérieur et constituée d'une couverture d'isolation thermique en aérogel est fixée entre le cadre métallique intérieur (31) et le composant métallique (32), dans laquelle le mur-rideau est un verre de mur-rideau visuel (30), le verre de mur-rideau visuel (30) est fixé au cadre métallique intérieur (31) à l'aide d'un mastic d'étanchéité en silicone structurel et des rubans adhésifs double face, le composant métallique (32) présente une forme U, le cadre métallique extérieur (33) est fixé au cadre métallique intérieur (31) à l'aide des bandes de rupture thermique en nylon (36) et le composant métallique (32) en forme U est fixé au cadre métallique intérieur (31) à l'aide d'éléments de fixation métalliques, des joints (34) sont disposés entre le cadre métallique extérieur (33) et le composant métallique (32), et la bande de rupture thermique en aérogel (35) entre le cadre métallique intérieur (31) et le composant métallique (32) est étroitement fixée à la face interne en forme U du composant métallique (32) ;
dans laquelle la conductivité thermique de la bande de rupture thermique (35) n'est pas supérieure à 0,021 W/(m K).
